# EUROPEAN PATENT APPLICATION

(11) **EP 4 841 225 A1**
(43) Date of publication of application: **18.11.2026**
(21) Application number: 24932582.0
(22) Date of filing: 23.12.2024
(51) Int. Cl.: G01J 3/24, G01J 3/14, G01J 3/36, G02B 5/18

(54) **SPECTROMETER AND SPECTROSCOPIC MEASUREMENT SYSTEM**

(30) Priority: 26.03.2024 JP 2024049309
(71) Applicant: Hamamatsu Photonics K.K., Hamamatsu-shi, Shizuoka 435-8558 (JP)
(72) Inventor: ARATA Ikuo, Hamamatsu-shi, Shizuoka 435-8558 (JP); TSUCHIYA Kunihiko, Hamamatsu-shi, Shizuoka 435-8558 (JP); OHTSUKA Kenichi, Hamamatsu-shi, Shizuoka 435-8558 (JP)
(74) Representative: Grünecker Patent- und Rechtsanwälte PartG mbB
(86) International application number: PCT/JP2024/045503
(87) International publication number: WO 2025/203943

(57) **Abstract**

A spectrometer includes a spectroscopic portion, a light separation portion that separates light spectrally separated by the spectroscopic portion into a first light in a first wavelength range and a second light in a second wavelength range shorter than the first wavelength range, and a light detection portion that detects an Nth-order diffracted light included in the first light separated by the light separation portion and also detects an Mth-order diffracted light included in the second light separated by the light separation portion. Here, N and M are integers other than 0 where an absolute value of N is smaller than an absolute value of M.

## Description

### Technical Field

One aspect of the present disclosure relates to a spectrometer and a spectroscopic measurement system.

### Background Art

Patent Documents 1 and 2 describe a spectroscopic device that spectrally separates incident light using a diffraction grating, and that detects the spectrally separated light using a light detection portion.

### Citation List

### Patent Literature

[Patent Literature 1]: Japanese Unexamined Patent Publication No. S57-111422
[Patent Literature 2]: Japanese Unexamined Patent Publication No. H8-254464

### Summary of Invention

### Technical Problem

In the spectroscopic device as described above, widening the detectable wavelength range may be required. However, it is difficult to enable the diffraction grating to diffract light in a wide wavelength range, and even if a diffraction grating capable of diffracting light in a wide wavelength range can be realized, it is concerned that the diffraction efficiency is low.

Therefore, an objective of one aspect of the present disclosure is to provide a spectrometer and a spectroscopic measurement system capable of spectrally separating and detecting light in a wide wavelength range with sufficient diffraction efficiency.

### Solution to Problem

A spectrometer according to one aspect of the present disclosure is [1] "a spectrometer comprising: a spectroscopic portion; a light separation portion that separates light spectrally separated by the spectroscopic portion into a first light in a first wavelength range and a second light in a second wavelength range shorter than the first wavelength range; and a light detection portion that detects an Nth-order diffracted light included in the first light separated by the light separation portion and detects an Mth-order diffracted light included in the second light separated by the light separation portion, where N and M are integers other than 0 where an absolute value of N is smaller than an absolute value of M."

In the spectrometer, the light separation portion separates the light spectrally separated by the spectroscopic portion into the first light in the first wavelength range and the second light in the second wavelength range. Then, the Nth-order diffracted light included in the first light and the Mth-order diffracted light included in the second light are detected by the light detection portion. Accordingly, the Nth-order diffracted light included in the first light and the Mth-order diffracted light included in the second light, which have a relatively high diffraction efficiency, can be detected in the light detection portion, and as a result, light in a wide wavelength range can be spectrally separated and detected with sufficient diffraction efficiency.

The spectrometer according to one aspect of the present disclosure may be [2] "the spectrometer according to [1], wherein the light detection portion includes a first photodetector that detects the Nth-order diffracted light and a second photodetector that detects the Mth-order diffracted light." In this case, the Nth-order diffracted light included in the first light and the Mth-order diffracted light included in the second light can be suitably detected in the light detection portion.

The spectrometer according to one aspect of the present disclosure may be [3] "the spectrometer according to [2], wherein the first photodetector and the second photodetector are constituted by two detectors having sensitivity wavelength ranges substantially different from each other." In this case, for example, the Nth-order diffracted light can be detected by the first photodetector having a sensitivity wavelength range suitable for detecting the Nth-order diffracted light included in the first light, and the Mth-order diffracted light can be detected by the second photodetector having a sensitivity wavelength range suitable for detecting the Mth-order diffracted light included in the second light.

The spectrometer according to one aspect of the present disclosure may be [4] "the spectrometer according to [2], wherein the first photodetector and the second photodetector are constituted by two detectors having sensitivity wavelength ranges substantially the same as each other." In this case, the first photodetector and the second photodetector can be constituted by, for example, the same detector.

The spectrometer according to one aspect of the present disclosure may be [5] "the spectrometer according to any one of [1] to [4], further comprising a filter that is disposed between the light separation portion and the light detection portion and that attenuates at least one of diffracted light other than the Nth-order diffracted light included in the first light and diffracted light other than the Mth-order diffracted light included in the second light." In this case, the Nth-order diffracted light included in the first light and the Mth-order diffracted light included in the second light can be more reliably detected in the light detection portion.

The spectrometer according to one aspect of the present disclosure may be [6] "the spectrometer according to any one of [1] to [5], wherein the light separation portion includes a dichroic surface that transmits one of the first light and the second light and reflects the other of the first light and the second light." In this case, the light separation portion can be suitably configured.

The spectrometer according to one aspect of the present disclosure may be [7] "the spectrometer according to [6], wherein the light separation portion includes a prism including the dichroic surface, and the light detection portion is fixed directly or indirectly to the prism." In this case, positioning of the light detection portion with respect to the dichroic surface can be facilitated.

The spectrometer according to one aspect of the present disclosure may be [8] "the spectrometer according to any one of [1] to [7], wherein the light detection portion detects, in addition to the Mth-order diffracted light included in the second light, an Nth-order diffracted light included in the second light." In this case, for example, when the diffraction efficiency of the Nth-order diffracted light of the spectroscopic portion is higher than the diffraction efficiency of the Mth-order diffracted light of the spectroscopic portion in a part of the second wavelength range, the diffraction efficiency in the part can be improved by detecting the Nth-order diffracted light included in the second light for the part. Alternatively, when the quantum efficiency of the photodetector is low in a part of the second wavelength range, the amount of signal acquired for the part can be increased by detecting both the Nth-order diffracted light and the Mth-order diffracted light included in the second light for the part.

The spectrometer according to one aspect of the present disclosure may be [9] "the spectrometer according to [8], wherein the light detection portion detects the Nth-order diffracted light included in the second light for a first portion in the second wavelength range, and detects the Mth-order diffracted light included in the second light for a second portion in the second wavelength range." In this case, for example, the diffraction efficiency in the first portion can be improved by detecting the Nth-order diffracted light included in the second light for the first portion in which the diffraction efficiency of the Nth-order diffracted light of the spectroscopic portion is higher than the diffraction efficiency of the Mth-order diffracted light of the spectroscopic portion.

The spectrometer according to one aspect of the present disclosure may be [10] "the spectrometer according to [9], wherein a diffraction efficiency of an Nth-order diffracted light of the spectroscopic portion in the first portion is higher than a diffraction efficiency of an Mth-order diffracted light of the spectroscopic portion in the first portion." In this case, the diffraction efficiency in the first portion can be improved by detecting the Nth-order diffracted light included in the second light for the first portion in which the diffraction efficiency of the Nth-order diffracted light of the spectroscopic portion is higher than the diffraction efficiency of the Mth-order diffracted light of the spectroscopic portion.

The spectrometer according to one aspect of the present disclosure may be [11] "the spectrometer according to [8], wherein the light detection portion detects both the Nth-order diffracted light and the Mth-order diffracted light included in the second light for a first portion in the second wavelength range, and detects the Mth-order diffracted light included in the second light for a second portion in the second wavelength range." In this case, for example, the amount of signal acquired for the first portion can be increased by detecting both the Nth-order diffracted light and the Mth-order diffracted light included in the second light for the first portion in which the quantum efficiency of the photodetector is low.

The spectrometer according to one aspect of the present disclosure may be [12] "the spectrometer according to [11], wherein the first portion is on a longer wavelength side than the second portion." In this case, for example, even when the quantum efficiency of the photodetector on the long wavelength side is lower than the quantum efficiency on the short wavelength side, the amount of signal acquired for the first portion can be increased by detecting both the Nth-order diffracted light and the Mth-order diffracted light included in the second light for the first portion in which the quantum efficiency of the photodetector is low.

The spectrometer according to one aspect of the present disclosure may be [13] "the spectrometer according to any one of [1] to [12], wherein the absolute value of N is 1 and the absolute value of M is 2." In this case, light in a wide wavelength range can be spectrally separated and detected with sufficient diffraction efficiency.

The spectrometer according to one aspect of the present disclosure may be [14] "the spectrometer according to any one of [1] to [13], wherein the spectroscopic portion includes a spectroscopic element capable of spectrally separating at least light in a wavelength range of 1000 nm to 1500 nm into a first-order diffracted light." In this case, while the diffraction efficiency of the diffraction grating is high on the long wavelength side, the diffraction efficiency of the diffracted light is low on the short wavelength side; however, in the spectrometer, by detecting the Nth-order diffracted light included in the first light in the first wavelength range on the long wavelength side and the Mth-order diffracted light included in the second light in the second wavelength range on the short wavelength side, light in a wide wavelength range can be spectrally separated and detected with sufficient diffraction efficiency.

The spectrometer according to one aspect of the present disclosure may be [15] "the spectrometer according to any one of [1] to [14], wherein the spectroscopic portion includes a spectroscopic element composed of a blazed diffraction grating, and a blaze wavelength of the blazed diffraction grating is 1000 nm or more." In this case, while the diffraction efficiency of the diffraction grating is high on the long wavelength side, the diffraction efficiency of the diffracted light is low on the short wavelength side; however, in the spectrometer, by detecting the Nth-order diffracted light included in the first light in the first wavelength range on the long wavelength side and the Mth-order diffracted light included in the second light in the second wavelength range on the short wavelength side, light in a wide wavelength range can be spectrally separated and detected with sufficient diffraction efficiency.

The spectrometer according to one aspect of the present disclosure may be [16] "the spectrometer according to any one of [1] to [15], wherein the light detection portion includes a plurality of pixels arranged along a first direction corresponding to a spectroscopic direction of the spectroscopic portion and a direction intersecting the first direction." In this case, for example, it becomes possible to acquire not only wavelength information, which is information along the spectroscopic direction, but also position information, which is information along the direction intersecting the spectroscopic direction.

A spectroscopic measurement system according to one aspect of the present disclosure is [17] "a spectroscopic measurement system comprising: the spectrometer according to any one of [1] to [16]; and a light irradiation portion that irradiates an object with light, wherein light irradiated from the light irradiation portion and reflected or scattered by the object is spectrally separated by the spectroscopic portion and detected by the light detection portion." According to the spectroscopic measurement system, for the reasons described above, light in a wide wavelength range can be spectrally separated and detected with sufficient diffraction efficiency in the spectrometer.

### Advantageous Effects of Invention

According to one aspect of the present disclosure, it is possible to provide a spectrometer and a spectroscopic measurement system capable of spectrally separating and detecting light in a wide wavelength range with sufficient diffraction efficiency.

### Brief Description of Drawings

[FIG. 1] FIG. 1 is a configuration diagram of a spectroscopic measurement system according to an embodiment.
[FIG. 2] FIG. 2 is a diagram showing a guide member.
[FIG. 3] FIG. 3 is a configuration diagram of a spectrometer.
[FIG. 4] FIG. 4 is a diagram for describing characteristics of a dichroic surface.
[FIG. 5] FIG. 5 is a diagram for describing diffracted light detected by a first photodetector.
[FIG. 6] FIG. 6 is a diagram for describing diffracted light detected by a second photodetector.
[FIG. 7] FIG. 7 is a diagram for describing characteristics of a filter.
[FIG. 8] (a) and (b) in FIG. 8 are diagrams for describing an improvement in diffraction efficiency by a spectroscopic portion.
[FIG. 9] FIG. 9 is a configuration diagram of a spectrometer according to a first modification example.
[FIG. 10] FIG. 10 is a diagram for describing characteristics of a dichroic surface in the first modification example.
[FIG. 11] FIG. 11 is a diagram for describing diffracted light detected by a first photodetector in the first modification example.
[FIG. 12] FIG. 12 is a diagram for describing diffracted light detected by a second photodetector in the first modification example.
[FIG. 13] FIG. 13 is a configuration diagram of a spectrometer according to a second modification example.
[FIG. 14] FIG. 14 is a diagram for describing an example of diffracted light detected by a second photodetector in the second modification example.
[FIG. 15] FIG. 15 is a diagram for describing characteristics of a filter in the second modification example.
[FIG. 16] FIG. 16 is a diagram for describing an example of diffracted light detected by a second photodetector in a third modification example.
[FIG. 17] FIG. 17 is a configuration diagram of a spectrometer according to a fourth modification example.
[FIG. 18] FIG. 18 is a diagram for describing characteristics of a dichroic surface in the fourth modification example.
[FIG. 19] FIG. 19 is a diagram for describing diffracted light detected by a first photodetector in the fourth modification example.
[FIG. 20] FIG. 20 is a diagram for describing diffracted light detected by a second photodetector in the fourth modification example.
[FIG. 21] FIG. 21 is a configuration diagram of a spectrometer according to a fifth modification example.

### Description of Embodiments

Hereinafter, an embodiment of the present disclosure will be described in detail with reference to the drawings. In the following description, the same reference signs are used for the same or corresponding elements, and duplicate descriptions will be omitted.

### [Spectroscopic Measurement System]

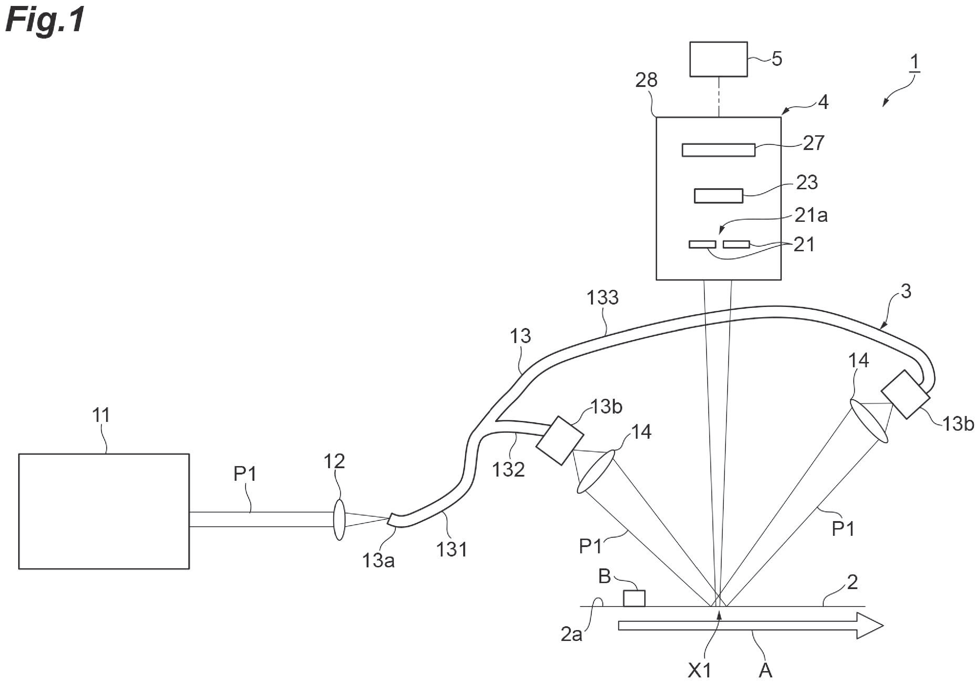

As shown in FIG. 1, a spectroscopic measurement system 1 according to the embodiment includes a conveying portion 2, a light irradiation portion 3, a spectrometer 4, and a processing portion 5. In the spectroscopic measurement system 1, an object B that is conveyed along a conveying direction A by the conveying portion 2 is irradiated with light from the light irradiation portion 3. The light irradiated from the light irradiation portion 3 and reflected or scattered by the object B is incident on the spectrometer 4, and is spectrally separated and detected in the spectrometer 4. A spectroscopic image is generated in the processing portion 5 based on the detection result. The spectroscopic image is an image including position information on the object B as well as wavelength information (spectral information) at the position. In this way, in the spectroscopic measurement system 1, the spectrometer 4 is configured as a hyperspectral camera, and hyperspectral observation of the object B is performed. The spectrometer 4 can also be regarded as a camera module or a spectroscopic measurement module.

The conveying portion 2 is a belt conveyor in this example, and conveys the object B placed on a conveying surface 2a (placement surface), which is the surface of the belt, along the conveying direction A. When the object B is observed (when the spectroscopic measurement system 1 is operated), the object B that is conveyed by the conveying portion 2 is irradiated with the light from the light irradiation portion 3. Accordingly, observation can be performed while changing the irradiation position of the light on the object B, and the entirety of the object B can be observed.

The light irradiation portion 3 includes a light source 11, a lens 12, a guide member 13, and a pair of lenses 14. The light source 11 is, for example, a wide wavelength range light source configured as a halogen lamp light source, a supercontinuum light source (SC light source), or the like. The light source 11 outputs, for example, an irradiation light P1 that is light in a wavelength range of 200 nm to 1700 nm.

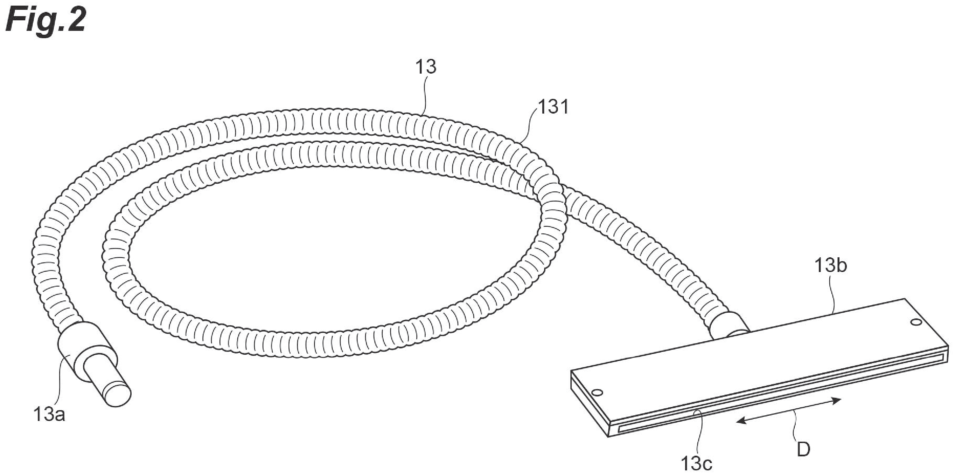

The irradiation light P1 is focused by the lens 12 and is incident on the guide member 13. The guide member 13 includes a first portion 131, a second portion 132, and a third portion 133. Each of the portions 131 to 133 is formed in a tubular shape. One end of the first portion 131 constitutes a light incident portion 13a that is a portion through which the irradiation light P1 is incident on the inside of the guide member 13. One ends of the second portion 132 and the third portion 133 are connected to the other end of the first portion 131. Namely, the guide member 13 has a structure in which the guide member 13 is branched into the second portion 132 and the third portion 133 at the other end of the first portion 131. A light emitting portion 13b (FIG. 2) that is a portion through which the irradiation light P1 is emitted from the guide member 13 is provided at the other end of each of the second portion 132 and the third portion 133. In the guide member 13, the irradiation light P1 incident from the light incident portion 13a is guided to be emitted from each of the light emitting portions 13b. Incidentally, FIG. 2 shows an example of the guide member 13 which does not include the second portion 132 and the third portion 133 and in which the light emitting portion 13b is provided at one end of the first portion 131.

The light emitting portion 13b is formed in a flat rectangular parallelepiped shape, and has a light emitting opening 13c having a rectangular shape. Therefore, when a direction parallel to the long sides of the light emitting opening 13c is defined as a direction D, the irradiation light P1 spread in the direction D is emitted from the light emitting portion 13b. The light emitting portion 13b is disposed such that the direction D is parallel to the conveying surface 2a and is perpendicular to the conveying direction A. Accordingly, the object B is irradiated with the irradiation light P1 spread in a direction perpendicular to the conveying direction A (the direction perpendicular to the drawing sheet of FIG. 1).

When the position where the object B is irradiated with the irradiation light P1 is defined as an irradiation position X1, a pair of the light emitting portions 13b are disposed on one side and the other side in the conveying direction A with respect to the irradiation position X1. The irradiation light P1 emitted from one light emitting portion 13b is focused by one of the pair of lenses 14, and irradiates the object B at the irradiation position X1 from the one side (for example, upstream side) in the conveying direction A. The irradiation light P1 emitted from the other light emitting portion 13b is focused by the other of the pair of lenses 14, and irradiates the object B at the irradiation position X1 from the other side (for example, downstream side) in the conveying direction A. Each of the lenses 14 is configured as, for example, a cylindrical lens in order to focus the irradiation light P1 spread in the direction perpendicular to the conveying direction A. In this way, by irradiating the object B with light from both sides in the conveying direction A, the object B having a three-dimensional shape can also be suitably irradiated with the light.

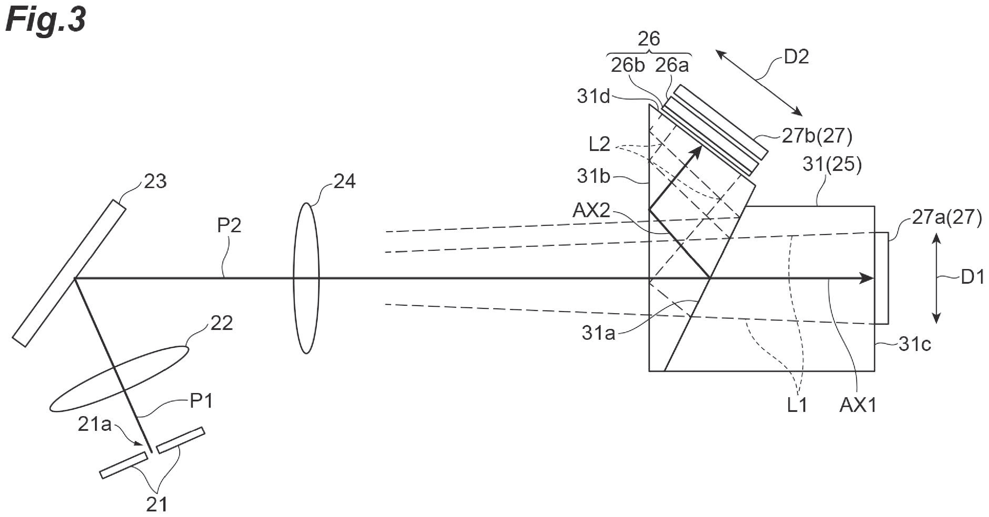

The irradiation light P1 irradiated from the light irradiation portion 3 and reflected or scattered by the object B is incident on the spectrometer 4. As shown in FIGS. 1 and 3, the spectrometer 4 includes a slit portion 21, a lens 22, a spectroscopic portion 23, a lens 24, a light separation portion 25, a filter 26, a light detection portion 27, and a housing 28. The housing 28 is formed, for example, in a box shape, and accommodates the slit portion 21, the lens 22, the spectroscopic portion 23, the lens 24, the light separation portion 25, the filter 26, and the light detection portion 27. The light detection portion 27 includes a first photodetector 27a and a second photodetector 27b.

The irradiation light P1 is incident on the slit portion 21. The slit portion 21 is, for example, a rectangular flat plate-shaped member in which a slit 21a is formed. The slit portion 21 is disposed such that the extending direction of the slit 21a is parallel to the conveying surface 2a and is perpendicular to the conveying direction A. The slit 21a allows at least a portion of the irradiation light P1 to pass therethrough and emits the at least a portion of the irradiation light P1 toward the lens 22. In the irradiation light P1 from the slit 21a, the position in the extending direction of the slit 21a represents position information on the object B along the direction perpendicular to the conveying direction A. The irradiation light P1 from the slit 21a is focused by the lens 22 and is incident on the spectroscopic portion 23.

The spectroscopic portion 23 spectrally separates the irradiation light P1 from the lens 22 and outputs light P2. The spectroscopic portion 23 is, for example, a reflective spectroscopic element composed of a blazed diffraction grating. The spectroscopic portion 23 is configured to be able to spectrally separate at least light in a wavelength range of 1000 nm to 1500 nm into a first-order diffracted light. "Being capable of spectrally separating light in a certain wavelength range into a first-order diffracted light" means, for example, that the diffraction efficiency of the first-order diffracted light in the wavelength range is 30% or more. In this example, the spectroscopic portion 23 is capable of spectrally separating the irradiation light P1 in a wavelength range of 800 nm to 1800 nm into a first-order diffracted light. The blaze wavelength of the blazed diffraction grating constituting the spectroscopic portion 23 is, for example, 1000 nm or more, and in this example, is 1200 nm. The light P2 spectrally separated by the spectroscopic portion 23 includes, as diffracted light of the irradiation light P1, zeroth-order diffracted light, first-order diffracted light, second-order diffracted light, third-order diffracted light, and so on. Hereinafter, the zeroth-order diffracted light, first-order diffracted light, second-order diffracted light, third-order diffracted light, and so on are also referred to as zeroth-order light, first-order light, second-order light, third-order light, and so on, respectively. The light from the spectroscopic portion 23 is focused by the lens 24 and is incident on the light separation portion 25. Incidentally, the spectroscopic portion 23 may be a transmissive spectroscopic element composed of a prism or the like, or a spectroscopic element composed of a holographic diffraction grating, depending on the design.

The light separation portion 25 separates the light P2 spectrally separated by the spectroscopic portion 23 into a first light L1 in a first wavelength range and a second light L2 in a second wavelength range shorter than the first wavelength range. In this example, the light separation portion 25 is constituted by a prism 31 (optical element) including a dichroic surface 31a. The dichroic surface 31a is constituted by, for example, a dielectric multilayer film or a periodic nanostructure. The prism 31 has, in addition to the dichroic surface 31a formed inside, a first surface 31b, a second surface 31c, and a third surface 31d as outer surfaces. The light P2 from the spectroscopic portion 23 is incident on the inside of the prism 31 from the first surface 31b and is incident on the dichroic surface 31a. The dichroic surface 31a transmits the first light L1 in the first wavelength range while reflecting the second light L2 in the second wavelength range shorter than the first wavelength range. The first light L1 that has transmitted through the dichroic surface 31a travels inside the prism 31 along an optical axis AX1 and is incident on the first photodetector 27a of the light detection portion 27 fixed on the second surface 31c. The second light L2 reflected by the dichroic surface 31a travels inside the prism 31 along an optical axis AX2, is reflected by the first surface 31b, and is incident on the filter 26. The second light L2 that has transmitted through the filter 26 is incident on the second photodetector 27b of the light detection portion 27 fixed on the third surface 31d.

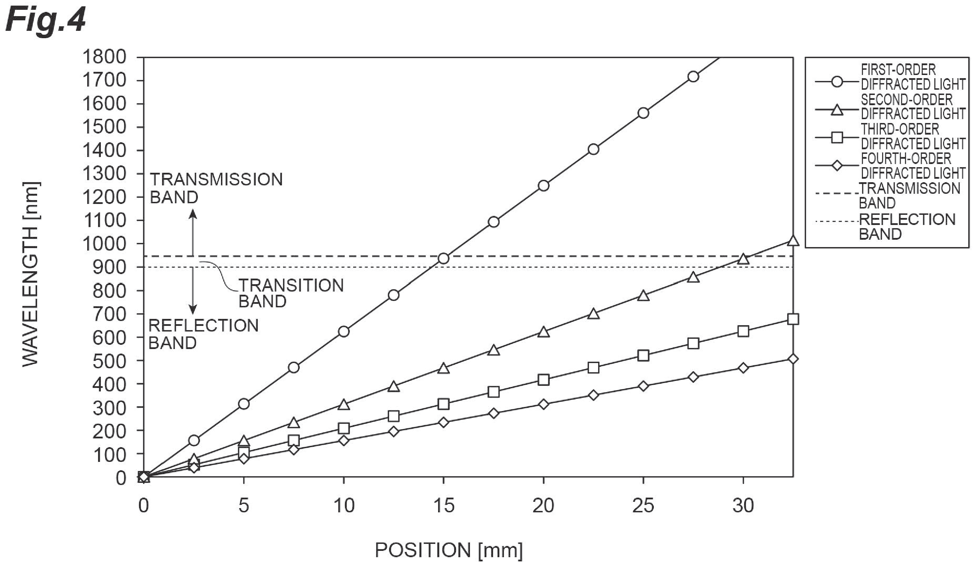

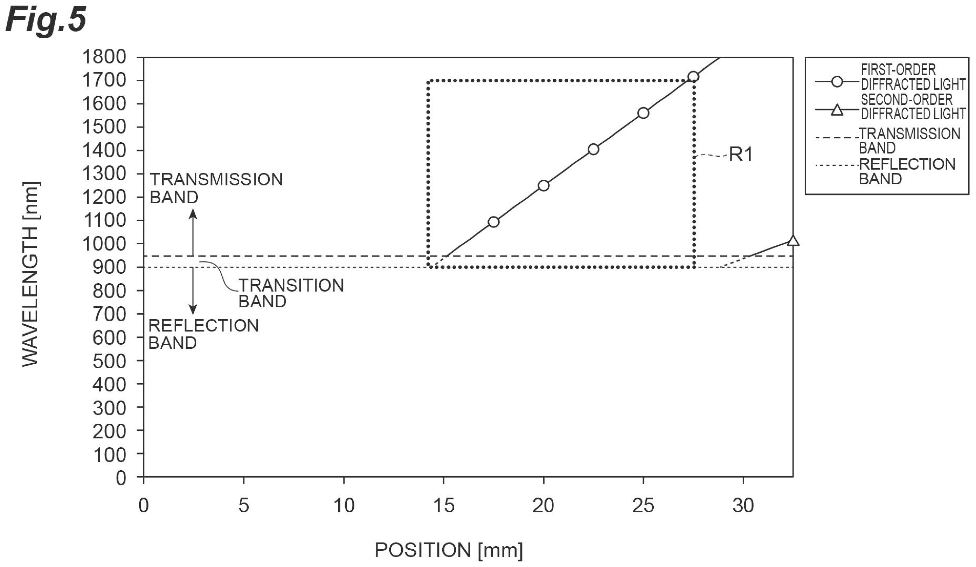

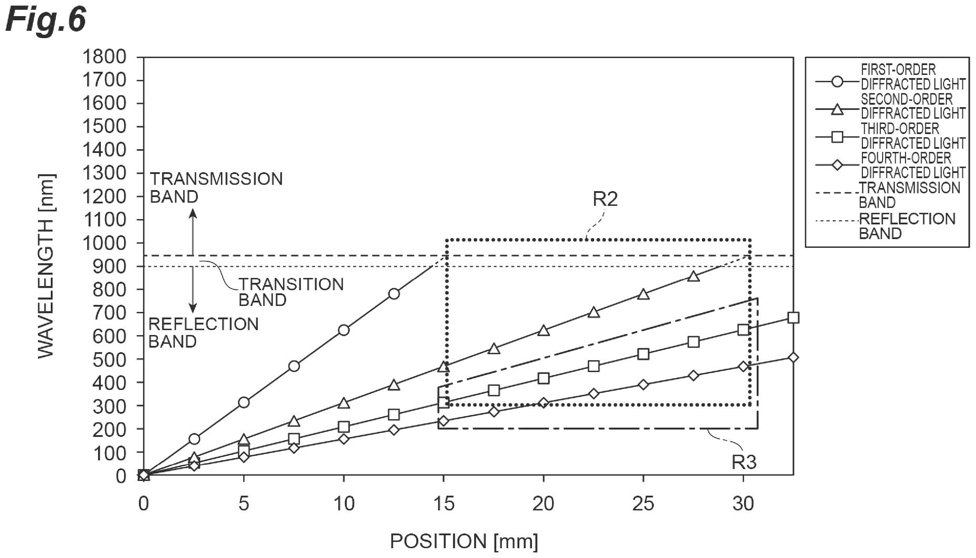

An example of the characteristics of the dichroic surface 31a will be described with reference to FIG. 4. The horizontal axis of the graph in FIG. 4 represents the position in the spectroscopic direction of the spectroscopic portion 23, and the vertical axis represents the wavelength. This point also applies to FIGS. 5 and 6 described later. FIG. 4 shows the first- to fourth-order light. As shown in FIG. 4, when the position in the spectroscopic direction is the same, the wavelength of the Lth-order light (L is an integer of 1 or more) is 1/L of the wavelength of the first-order light.

In the example of FIG. 4, the dichroic surface 31a transmits light of 950 nm or more (transmission band) as the first wavelength range and reflects light of 900 nm or less (reflection band) as the second wavelength range. In this way, the dichroic surface 31a has a long-pass characteristic. In addition, the dichroic surface 31a partially transmits light in the range of 900 nm to 950 nm (transition band) between the transmission band and the reflection band. From the viewpoint of smoothly realizing the spectroscopic image generation process (joining) described later without steps, a wider transition band is preferable.

In this example, the irradiation light P1 in a wavelength range of 200 nm to 1700 nm is spectrally separated in the spectroscopic portion 23, and among the spectrally separated light P2, the first light L1 having a wavelength of 950 nm to 1700 nm (first wavelength range) transmits through the dichroic surface 31a, and the second light L2 having a wavelength of 200 nm to 900 nm (second wavelength range) is reflected by the dichroic surface 31a. In the transition band of 900 nm to 950 nm, the characteristic of the dichroic surface 31a switches between the transmission characteristic and the reflection characteristic.

Returning to FIG. 3, the filter 26 is disposed between the prism 31 (light separation portion 25) and the second photodetector 27b of the light detection portion 27. In this example, the filter 26 is fixed on the third surface 31d of the prism 31, and the second photodetector 27b is fixed on the third surface 31d via the filter 26. The filter 26 includes a plate-shaped body portion 26a and a filter portion 26b formed in a layer on the body portion 26a. The filter 26 is disposed such that the filter portion 26b faces the prism 31 side. In this example, the filter portion 26b functions as an order sorting filter that transmits the second-order light included in the second light L2 and blocks diffracted light other than the second-order light included in the second light L2 (higher-order light greater than the second order). Details of the filter 26 will be described later.

The first light L1 and the second light L2 separated by the light separation portion 25 are detected by the light detection portion 27. The light detection portion 27 includes the first photodetector 27a that detects the first light L1 and the second photodetector 27b that detects the second light L2. Each of the first photodetector 27a and the second photodetector 27b is, for example, an image sensor or a line sensor constituted by a single sensor element.

The light detection portion 27 is fixed to the prism 31. In this example, the first photodetector 27a is fixed on the second surface 31c of the prism 31 such that the first light L1 emitted from the prism 31 is incident thereon. In this example, the first photodetector 27a is indirectly fixed to the second surface 31c of the prism 31 via a metal component (not shown). The first photodetector 27a may be directly fixed to the second surface 31c of the prism 31. The second photodetector 27b is fixed on the third surface 31d of the prism 31 via the filter 26 such that the second light L2 emitted from the prism 31 is incident thereon.

The first photodetector 27a and the second photodetector 27b are constituted by two detectors having sensitivity wavelength ranges substantially different from each other. Namely, the sensitivity wavelength range of the detector constituting the first photodetector 27a is substantially different from the sensitivity wavelength range of the detector constituting the second photodetector 27b. The fact that two detectors have sensitivity wavelength ranges substantially different from each other includes, for example, the case where the types of the two detectors are different from each other. In addition, the fact that two detectors have sensitivity wavelength ranges substantially different from each other includes, in the case where the types of the two detectors are the same as each other, the case where, when the wavelength range in which the sensitivity wavelength ranges of the two detectors overlap each other is defined as an overlapping portion, the ratio of the overlapping portion to the sensitivity wavelength range of each of the two detectors is 90% or less. In this example, the first photodetector 27a is, for example, an InGaAs image sensor. The second photodetector 27b is, for example, a CCD (Charge-Coupled Device) image sensor or a CMOS (Complementary Metal-Oxide Semiconductor) image sensor. That is, in this example, the first photodetector 27a and the second photodetector 27b are detectors of different types from each other. The sensitivity wavelength range of the first photodetector 27a is, for example, 900 nm to 1700 nm, and overlaps at least a portion (in this example, the entirety) of the first wavelength range. The sensitivity wavelength range of the second photodetector 27b is, for example, 300 nm to 1000 nm, and overlaps at least a portion (in this example, a portion on the long wavelength side) of the second wavelength range. As in this example, the sensitivity wavelength range of the first photodetector 27a and the sensitivity wavelength range of the second photodetector 27b may have an overlapping portion.

The first photodetector 27a has a plurality of pixels arranged along a first direction D1 corresponding to the spectroscopic direction of the spectroscopic portion 23 and a direction perpendicular to the first direction D1. In this example, the first photodetector 27a is disposed such that the first direction D1 is parallel to the spectroscopic direction of the spectroscopic portion 23. The second photodetector 27b has a plurality of pixels arranged along a second direction D2 corresponding to the spectroscopic direction of the spectroscopic portion 23 and a direction perpendicular to the second direction D2. In this example, the second photodetector 27b is disposed such that the second direction D2 is inclined with respect to the spectroscopic direction of the spectroscopic portion 23. Namely, in each of the first photodetector 27a and the second photodetector 27b, the plurality of pixels are disposed side by side in a two-dimensional manner in a matrix pattern. In each of the first photodetector 27a and the second photodetector 27b, the position in the direction corresponding to the spectroscopic direction (the first direction D1 or the second direction D2) represents wavelength information, and the position in the direction perpendicular to the direction represents position information on the object B along the direction perpendicular to the conveying direction A. In the following description, the position in the spectroscopic direction will be described in correspondence with the position on the detection surfaces of the first photodetector 27a and the second photodetector 27b.

With reference to FIG. 5, the diffracted light detected by the first photodetector 27a will be described. As shown in FIG. 5, the first photodetector 27a detects the light in the transmission band in FIG. 4. In FIG. 5, a detection region R1 indicating the position and wavelength range detected by the first photodetector 27a is indicated by a rectangular dotted line. In this example, the first photodetector 27a detects light in a wavelength range of 900 nm to 1700 nm incident at positions of approximately 14 mm to approximately 28 mm. Only the first-order light included in the first light L1 is incident on the first photodetector 27a, and only the first-order light is detected by the first photodetector 27a.

With reference to FIG. 6, the diffracted light detected by the second photodetector 27b will be described. As shown in FIG. 6, the second photodetector 27b detects the light in the reflection band in FIG. 4. In FIG. 6, a detection region R2 indicating the position and wavelength range detected by the second photodetector 27b is indicated by a rectangular dotted line. In addition, a blocking region R3 indicating the position and wavelength range where the filter 26 (filter portion 26b) blocks light is indicated by a trapezoidal one-dot chain line. In this example, the second photodetector 27b detects light in a wavelength range of 300 nm to 1000 nm incident at positions of approximately 15 mm to approximately 31 mm. The filter portion 26b is disposed such that the wavelength of light transmitted at positions of approximately 15 mm to approximately 31 mm changes continuously, so as to block the third-order light and the fourth-order light included in the second light L2. Accordingly, only the second-order light included in the second light L2 is incident on the second photodetector 27b, and only the second-order light is detected by the second photodetector 27b.

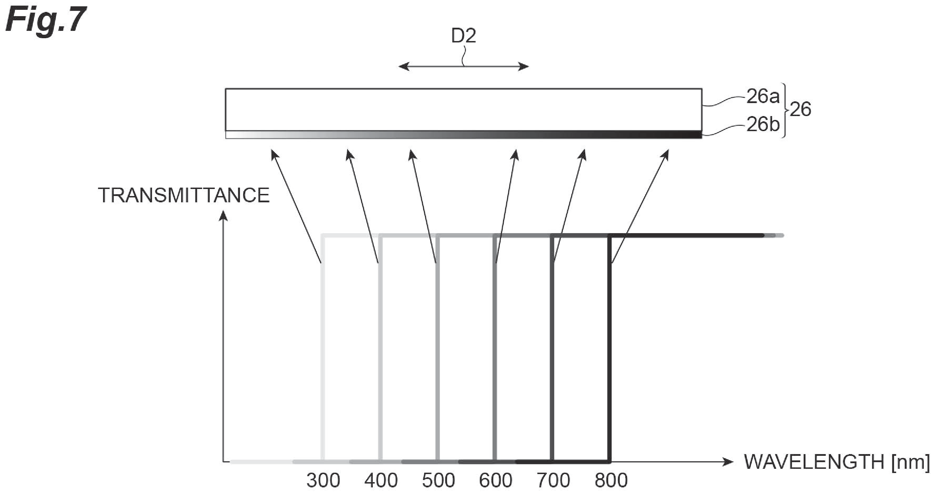

An example of the characteristics of the filter 26 (filter portion 26b) will be described with reference to FIG. 7. The filter portion 26b is a filter in which the wavelength of light that can be transmitted changes along the second direction D2. In FIG. 7, each position of the filter portion 26b in the second direction D2 and the wavelength of light that can be transmitted by the filter portion 26b at each position are shown in grayscale. For example, at one end of the filter portion 26b (the position where the color is relatively close to white), the filter portion 26b can transmit light with a wavelength of 300 nm or more and blocks light with a wavelength of less than 300 nm. At the other end of the filter portion 26b (the position where the color is relatively close to black), the filter portion 26b can transmit light with a wavelength of 800 nm or more and blocks light with a wavelength of less than 800 nm. By disposing such a filter portion 26b in a predetermined positional relationship with respect to the second photodetector 27b, light can be blocked at the target position and wavelength range as shown in FIG. 6. In FIG. 7, the characteristic at each position of the filter portion is a long-pass characteristic that transmits wavelengths longer than a certain wavelength; however, the characteristic at each position of the filter portion may be, for example, a bandpass characteristic that transmits only a certain wavelength width.

The processing portion 5 is communicably connected to the light detection portion 27, and generates a spectroscopic image based on the detection result of the light detection portion 27. The processing portion 5 is composed of, for example, a computer including a processor (CPU) and a RAM and a ROM that are recording media. In this example, the processing portion 5 generates a spectroscopic image based on the detection results of the first photodetector 27a and the second photodetector 27b (by joining the detection result of the first photodetector 27a and the detection result of the second photodetector 27b together). As described above, the first-order light included in the first light L1 is detected by the first photodetector 27a, and the second-order light included in the second light L2 is detected by the second photodetector 27b. Based on the detection results, the processing portion 5 generates, for example, a spectroscopic image showing the intensity in the first wavelength range and the second wavelength range.

A method of observing the object B in the spectroscopic measurement system 1 will be described. As described above, first, the object B that is conveyed along the conveying direction A by the conveying portion 2 is irradiated with the irradiation light P1 from the light irradiation portion 3. Subsequently, the irradiation light P1 irradiated from the light irradiation portion 3 and reflected or scattered by the object B is spectrally separated by the spectroscopic portion 23 and detected by the light detection portion 27. At this time, the light P2 spectrally separated by the spectroscopic portion 23 is separated into the first light L1 and the second light L2 by the light separation portion 25, the first-order light included in the first light L1 is detected by the first photodetector 27a, and the second-order light included in the second light L2 is detected by the second photodetector 27b. Subsequently, a spectroscopic image is generated in the processing portion 5 based on the detection results of the first photodetector 27a and the second photodetector 27b.

### [Functions and Effects]

As described above, in the spectrometer 4, the light separation portion 25 separates the light P2 spectrally separated by the spectroscopic portion 23 into the first light L1 in the first wavelength range and the second light L2 in the second wavelength range. Then, the first-order light included in the first light L1 and the second-order light included in the second light L2 are detected by the light detection portion 27. Accordingly, the first-order light included in the first light L1 and the second-order light included in the second light L2, which have a relatively high diffraction efficiency, can be detected in the light detection portion 27, and as a result, light in a wide wavelength range can be spectrally separated and detected with sufficient diffraction efficiency.

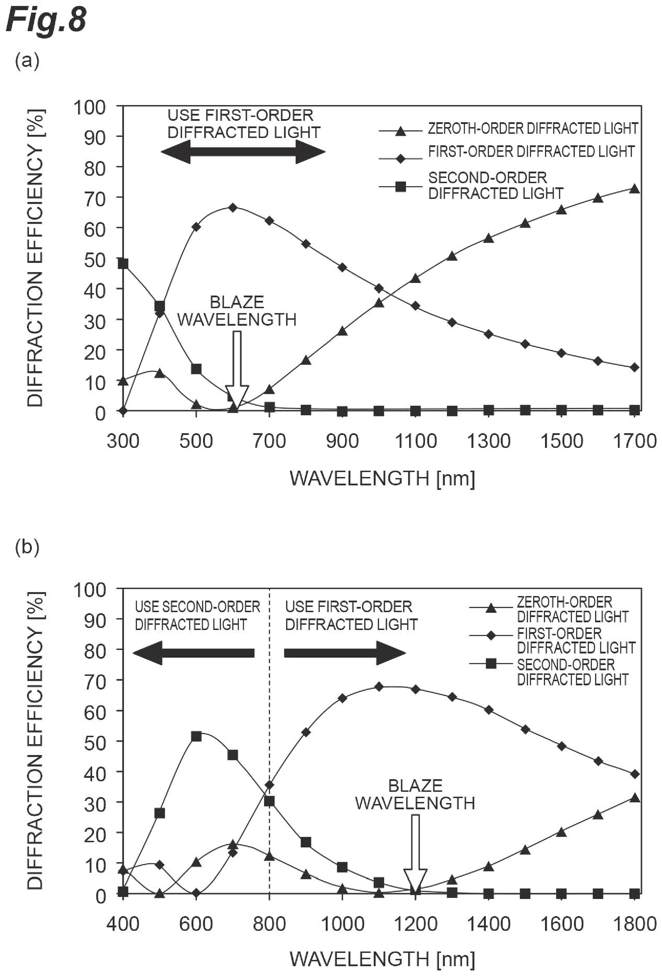

This point will be further described with reference to FIG. 8. (a) in FIG. 8 is an example of a simulation result of diffraction efficiency in a diffraction grating having a blaze wavelength of 600 nm, and (b) in FIG. 8 is an example of a simulation result of diffraction efficiency in a diffraction grating having a blaze wavelength of 1200 nm. For example, when light is spectrally separated by the diffraction grating shown in (a) of FIG. 8 and the first-order light thereof is detected, the diffraction efficiency is low in the region on the long wavelength side. In contrast, for example, by spectrally separating light using the diffraction grating shown in (b) of FIG. 8, using the first-order light for the first wavelength range on the long wavelength side (for example, 800 nm or more), and using the second-order light for the second wavelength range on the short wavelength side (for example, 800 nm or less), the first-order light included in the first light L1 and the second-order light included in the second light L2, which have a relatively high diffraction efficiency, can be detected in the light detection portion 27, and light in a wide wavelength range can be spectrally separated and detected with sufficient diffraction efficiency.

In the spectrometer 4, the light detection portion 27 includes the first photodetector 27a that detects the first-order light and the second photodetector 27b that detects the second-order light. Accordingly, the first-order light included in the first light L1 and the second-order light included in the second light L2 can be suitably detected in the light detection portion 27.

In the spectrometer 4, the first photodetector 27a and the second photodetector 27b are constituted by two detectors having sensitivity wavelength ranges substantially different from each other. Accordingly, for example, the first-order light can be detected by the first photodetector 27a having a sensitivity wavelength range suitable for detecting the first-order light included in the first light L1, and the second-order light can be detected by the second photodetector 27b having a sensitivity wavelength range suitable for detecting the second-order light included in the second light L2. For example, in the above-described example, the first photodetector 27a is constituted by an InGaAs image sensor, and the second photodetector 27b is constituted by a CMOS image sensor.

The spectrometer 4 includes the filter 26 (filter portion 26b) that is disposed between the light separation portion 25 and the second photodetector 27b and that blocks diffracted light other than the second-order light included in the second light L2. Accordingly, the second-order light included in the second light L2 can be more reliably detected in the second photodetector 27b.

In the spectrometer 4, the light separation portion 25 has the dichroic surface 31a that transmits the first light L1 and reflects the second light L2. Accordingly, the light separation portion 25 can be suitably configured.

In the spectrometer 4, the light separation portion 25 is the prism 31 including the dichroic surface 31a, and the first photodetector 27a and the second photodetector 27b are fixed to the prism 31. Accordingly, positioning of the first photodetector 27a and the second photodetector 27b with respect to the dichroic surface 31a can be facilitated. For example, in the above-described example, by fixing the first photodetector 27a to the second surface 31c of the prism 31 and fixing the second photodetector 27b to the third surface 31d of the prism 31, the first photodetector 27a and the second photodetector 27b can be easily positioned with respect to the dichroic surface 31a.

In the spectrometer 4, the spectroscopic portion 23 includes a spectroscopic element capable of spectrally separating at least light in a wavelength range of 1000 nm to 1500 nm into a first-order light. When the spectroscopic portion 23 is configured in this way, as shown in (b) of FIG. 8, for example, the diffraction efficiency of the first-order light of the spectroscopic portion 23 on the long wavelength side is high, while the diffraction efficiency of the first-order light on the short wavelength side is low. In addition, on the short wavelength side, the diffraction efficiency of the second-order light is higher than the diffraction efficiency of the first-order light. Therefore, in the spectrometer 4, using such a spectroscopic element, the first-order light included in the first light L1 is detected for the first wavelength range on the long wavelength side, and the second-order light included in the second light L2 is detected for the second wavelength range on the short wavelength side. Accordingly, light in a wide wavelength range can be spectrally separated and detected with sufficient diffraction efficiency.

In the spectrometer 4, the spectroscopic portion 23 includes a spectroscopic element composed of a blazed diffraction grating, and the blaze wavelength of the blazed diffraction grating is 1000 nm or more, for example, 1200 nm. When the blaze wavelength is set to the long wavelength side in this way, as shown in (b) of FIG. 8, for example, the diffraction efficiency of the first-order light of the spectroscopic portion 23 on the long wavelength side is high, while the diffraction efficiency of the first-order light on the short wavelength side is low. In addition, on the short wavelength side, the diffraction efficiency of the second-order light is higher than the diffraction efficiency of the first-order light. Therefore, in the spectrometer 4, using such a spectroscopic element, the first-order light included in the first light L1 is detected for the first wavelength range on the long wavelength side, and the second-order light included in the second light L2 is detected for the second wavelength range on the short wavelength side. Accordingly, light in a wide wavelength range can be spectrally separated and detected with sufficient diffraction efficiency.

In the spectrometer 4, the first photodetector 27a has a plurality of pixels arranged along the first direction D1 corresponding to the spectroscopic direction of the spectroscopic portion 23 and a direction perpendicular to the first direction D1. In addition, the second photodetector 27b has a plurality of pixels arranged along the second direction D2 corresponding to the spectroscopic direction of the spectroscopic portion 23 and a direction perpendicular to the second direction D2. Accordingly, for example, it becomes possible to acquire not only wavelength information, which is information along the spectroscopic direction, but also position information, which is information along the direction perpendicular to the spectroscopic direction.

The spectroscopic measurement system 1 includes the spectrometer 4 and the light irradiation portion 3 that irradiates the object B with light. In the spectroscopic measurement system 1, the light irradiated from the light irradiation portion 3 and reflected or scattered by the object B is spectrally separated by the spectroscopic portion 23 and detected by the light detection portion 27. According to the spectroscopic measurement system 1, for the reasons described above, light in a wide wavelength range can be spectrally separated and detected with sufficient diffraction efficiency in the spectrometer 4.

### [Modification Examples]

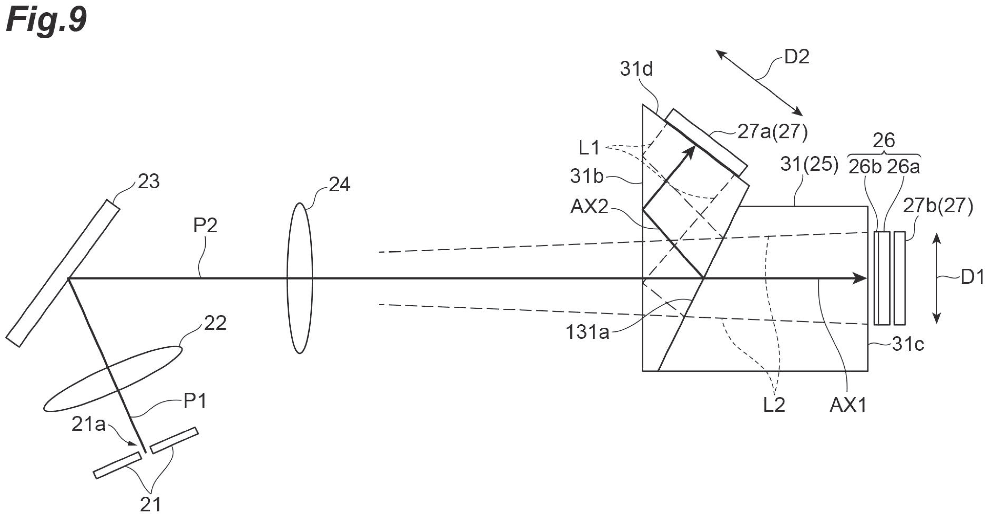

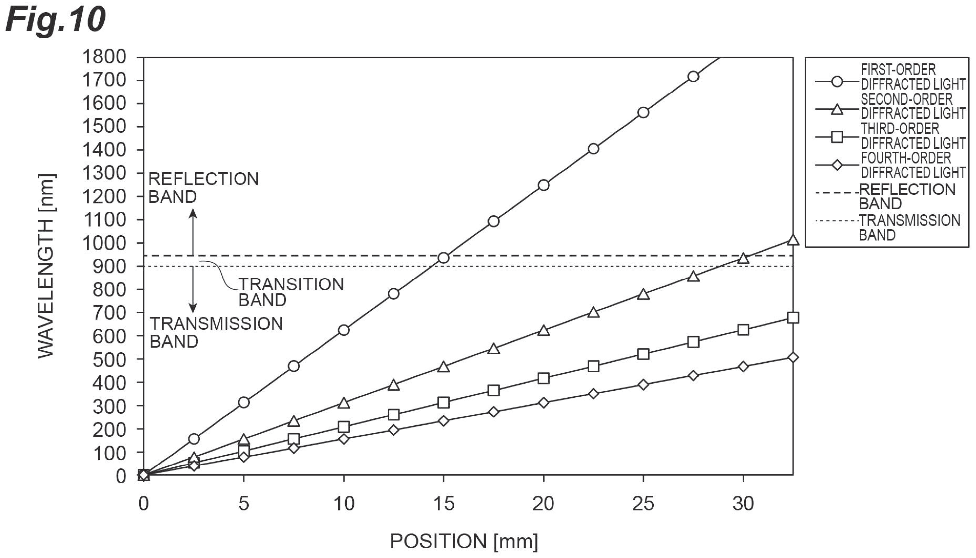

In the first modification example shown in FIG. 9, the prism 31 includes a dichroic surface 131a having characteristics different from those of the dichroic surface 31a of the above-described embodiment. The dichroic surface 131a reflects the first light L1 while transmitting the second light L2. The dichroic surface 131a is constituted by, for example, a dielectric multilayer film. As shown in FIG. 10, the dichroic surface 131a reflects light of 950 nm or more (reflection band) as the first wavelength range and transmits light of 900 nm or less (transmission band) as the second wavelength range. In this way, the dichroic surface 131a has a short-pass characteristic. In this example, the irradiation light P1 in a wavelength range of 200 nm to 1700 nm is spectrally separated in the spectroscopic portion 23, and among the spectrally separated light P2, the first light L1 having a wavelength of 950 nm to 1700 nm (first wavelength range) is reflected by the dichroic surface 131a, and the second light L2 having a wavelength of 200 nm to 900 nm (second wavelength range) transmits through the dichroic surface 131a. In the transition band of 900 nm to 950 nm, the characteristic of the dichroic surface 131a switches between the transmission characteristic and the reflection characteristic.

Therefore, in the first modification example, the arrangement relationship among the filter 26, the first photodetector 27a, and the second photodetector 27b is different from that of the above-described embodiment. In this example, the first photodetector 27a is fixed on the third surface 31d of the prism 31 such that the first light L1 emitted from the prism 31 is incident thereon. In this example, the first photodetector 27a is indirectly fixed to the third surface 31d of the prism 31 via a metal component (not shown). The first photodetector 27a may be directly fixed to the third surface 31d of the prism 31. The second photodetector 27b is fixed on the second surface 31c of the prism 31 via the filter 26 such that the second light L2 emitted from the prism 31 is incident thereon. That is, in the first modification example, the arrangement relationship between the filter 26 and the second photodetector 27b and the first photodetector 27a is the reverse of the arrangement relationship of the above-described embodiment.

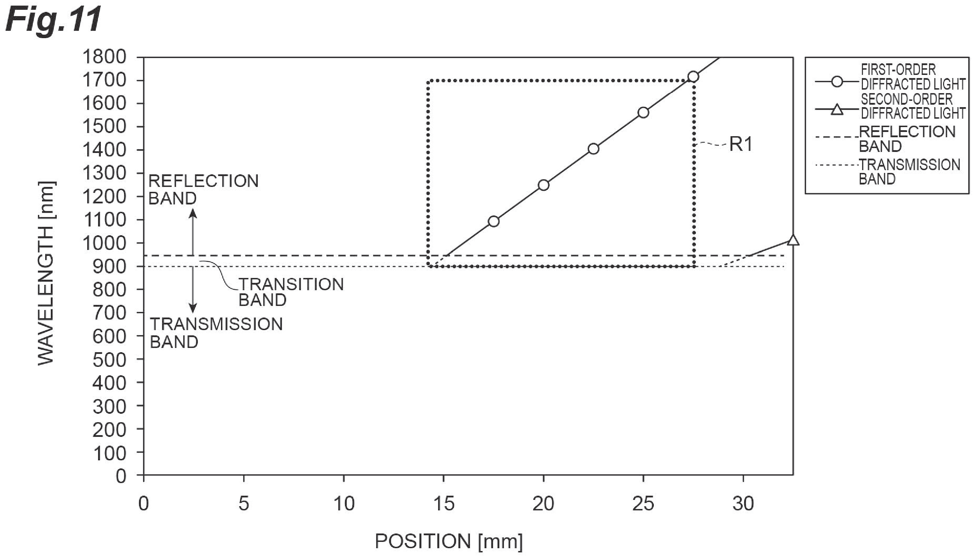

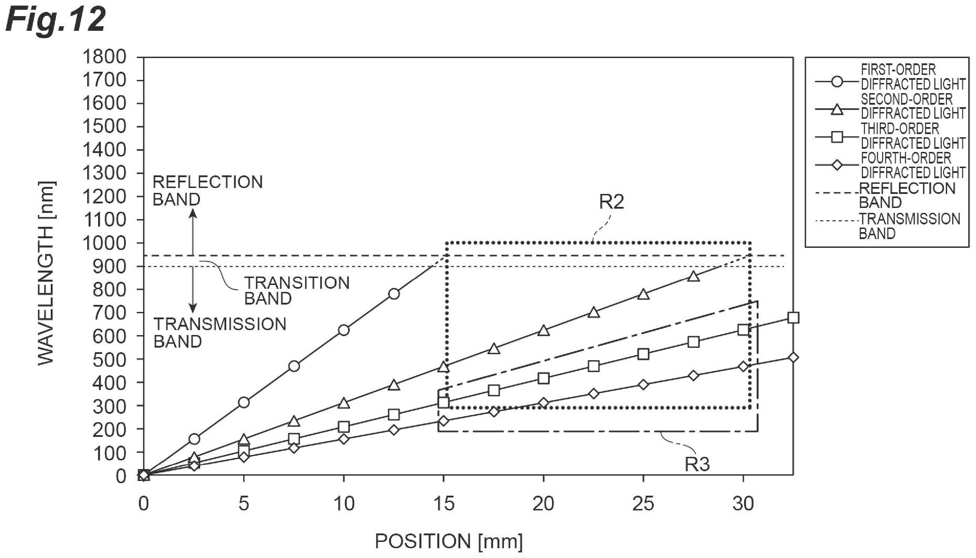

With reference to FIGS. 11 and 12, the diffracted light detected by each of the first photodetector 27a and the second photodetector 27b in the first modification example will be described. As shown in FIG. 11, the first photodetector 27a detects, unlike the above-described embodiment, not the light in the transmission band but the light in the reflection band. As shown in FIG. 12, the second photodetector 27b detects, unlike the above-described embodiment, not the light in the reflection band but the light in the transmission band. With the first modification example as well, similarly to the above-described embodiment, light in a wide wavelength range can be spectrally separated and detected with sufficient diffraction efficiency.

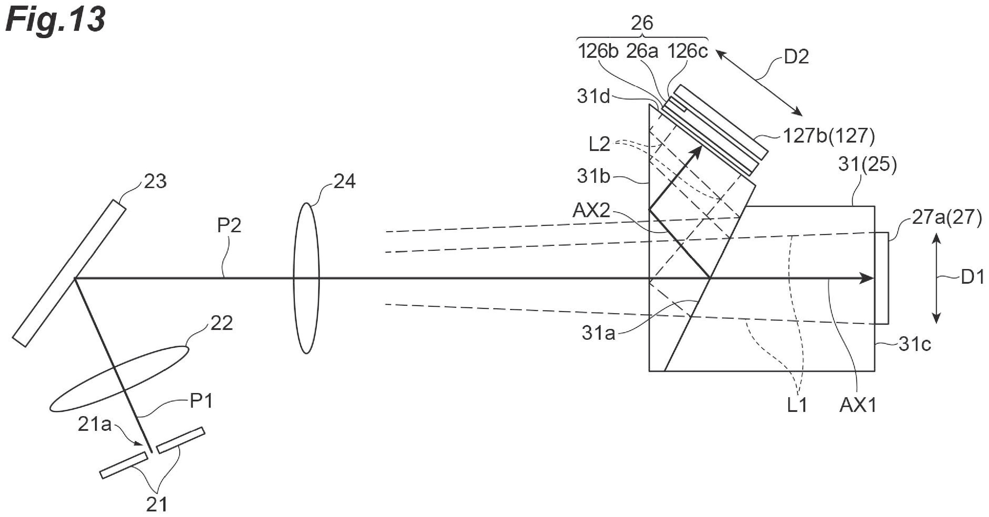

In the second modification example shown in FIG. 13, the blocking region of the filter 26 and the detection region of the light detection portion 27 are different from those of the above-described embodiment. In this example, the filter 26 has a first filter portion 126b and a second filter portion 126c instead of the filter portion 26b, and the light detection portion 27 has a second photodetector 127b instead of the second photodetector 27b.

The first filter portion 126b and the second filter portion 126c are formed in layers on the body portion 26a. The first filter portion 126b is formed on one side surface of the body portion 26a, and the second filter portion 126c is formed on the other side surface of the body portion 26a. The filter 26 is disposed such that the first filter portion 126b faces the prism 31 side and the second filter portion 126c faces the side opposite to the prism 31. The first filter portion 126b is disposed such that the entirety of the light traveling toward the second photodetector 127b is incident on the first filter portion 126b. In contrast, the second filter portion 126c is disposed such that a part of the light traveling toward the second photodetector 127b is incident on the second filter portion 126c. In this example, the first filter portion 126b transmits the first-order light and the second-order light included in the second light L2 and blocks diffracted light other than the first-order light and the second-order light included in the second light L2. The second filter portion 126c transmits the first-order light included in the second light L2 and blocks diffracted light other than the first-order light included in the second light L2 (higher-order light greater than the first order). Details of the first filter portion 126b and the second filter portion 126c will be described later.

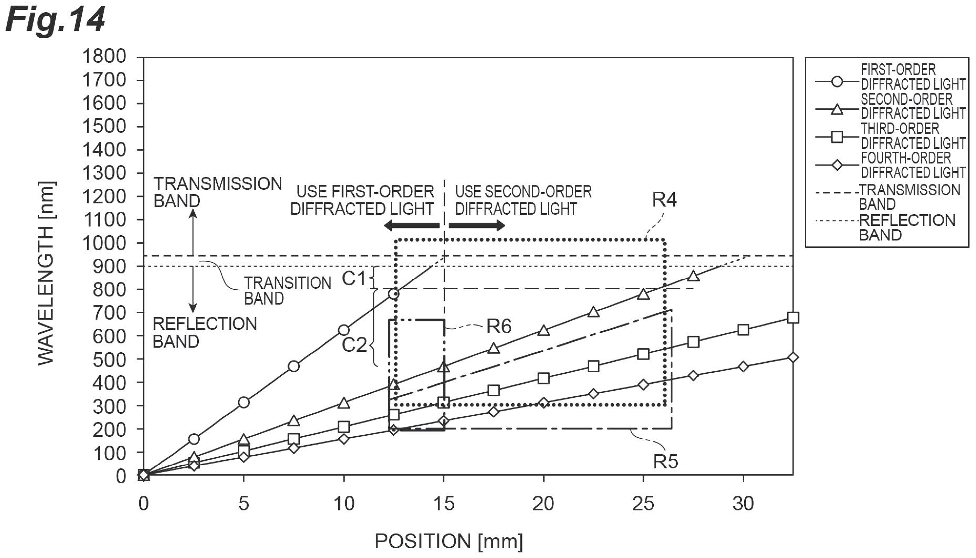

The second photodetector 127b differs from the second photodetector 27b of the above-described embodiment in that it is configured to detect the first-order light and the second-order light included in the second light L2. In FIG. 14, a detection region R4 of the second photodetector 127b is indicated by a rectangular dotted line. In addition, a blocking region R5 of the first filter portion 126b is indicated by a trapezoidal one-dot chain line. In addition, a blocking region R6 of the second filter portion 126c is indicated by a rectangular two-dot chain line. In this example, the second photodetector 127b detects light in a wavelength range of 300 nm to 1000 nm incident at positions of approximately 12.5 mm to approximately 26 mm. The first filter portion 126b is disposed such that the wavelength of light transmitted at positions of approximately 12.5 mm to approximately 26 mm changes continuously, so as to block the third-order light and the fourth-order light included in the second light L2. The second filter portion 126c is disposed so as to block the second-order light, the third-order light, and the fourth-order light included in the second light L2 at positions of approximately 12.5 mm to approximately 15 mm, and does not block diffracted light at positions of approximately 15 mm to approximately 26 mm. Accordingly, the first-order light included in the second light L2 is incident at positions of approximately 12.5 mm to approximately 15 mm of the second photodetector 127b, and the second-order light included in the second light L2 is incident at positions of approximately 15 mm to approximately 26 mm of the second photodetector 127b. As a result, in the example of FIG. 14, the first-order light is detected for the first portion C1 (wavelength range of 800 nm to 900 nm) in the second wavelength range, and the second-order light is detected for the second portion C2 (wavelength range of approximately 450 nm to 800 nm) in the second wavelength range. The first portion C1 is on a longer wavelength side than the second portion C2.

Such detection is effective, for example, when the diffraction efficiency of the first-order light in the first portion C1 (wavelength range of 800 nm to 900 nm) in the second wavelength range is higher than the diffraction efficiency of the second-order light in the first portion C1, as shown in (b) of FIG. 8.

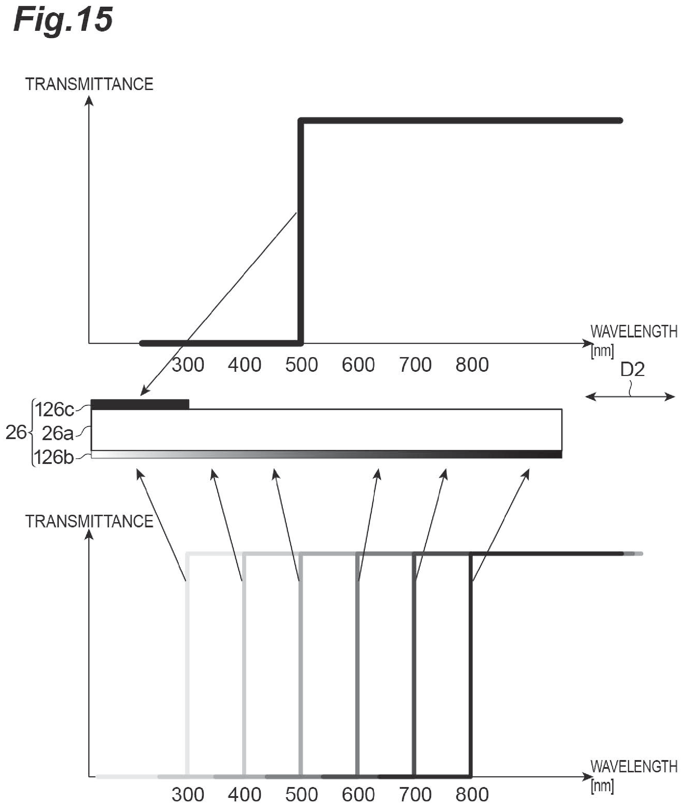

An example of the characteristics of the filter 26 in the second modification example will be described with reference to FIG. 15. The characteristics of the first filter portion 126b are the same as those of the filter portion 26b. The first filter portion 126b is provided over the entire one side surface of the body portion 26a, and the second filter portion 126c is provided over a part of the other side surface of the body portion 26a. The second filter portion 126c can transmit light with a wavelength of 500 nm or more incident on the part and blocks light with a wavelength of less than 500 nm. Incidentally, the characteristics of the second filter portion 126c shown in FIG. 15 are different from those in FIG. 14, and in the example of FIG. 14, the second filter portion 126c can transmit light with a wavelength of approximately 650 nm or more.

With the second modification example as well, similarly to the above-described embodiment, light in a wide wavelength range can be spectrally separated and detected with sufficient diffraction efficiency. In addition, the light detection portion 27 detects, in addition to the second-order light included in the second light L2, the first-order light included in the second light L2. In this example, the light detection portion 27 detects the first-order light included in the second light L2 for the first portion C1 (800 nm to 900 nm) in the second wavelength range, and detects the second-order light included in the second light L2 for the second portion C2 (approximately 450 nm to 800 nm) in the second wavelength range. Accordingly, when the diffraction efficiency of the first-order light of the spectroscopic portion 23 is higher than the diffraction efficiency of the second-order light in the first portion C1 of the second wavelength range, the diffraction efficiency in the first portion C1 can be improved by detecting the first-order light included in the second light L2 for the first portion C1.

In addition, the diffraction efficiency of the first-order light of the spectroscopic portion 23 in the first portion C1 is higher than the diffraction efficiency of the second-order light of the spectroscopic portion 23 in the first portion C1. Accordingly, the diffraction efficiency in the first portion C1 can be improved by detecting the first-order light included in the second light L2 for the first portion C1 in which the diffraction efficiency of the first-order light of the spectroscopic portion 23 is higher than the diffraction efficiency of the second-order light. For example, when the blaze wavelength of the spectroscopic portion 23 is 1200 nm, the diffraction efficiency of the first-order light in the first portion C1 (800 nm to 900 nm) is higher than the diffraction efficiency of the second-order light, as shown in (b) of FIG. 8.

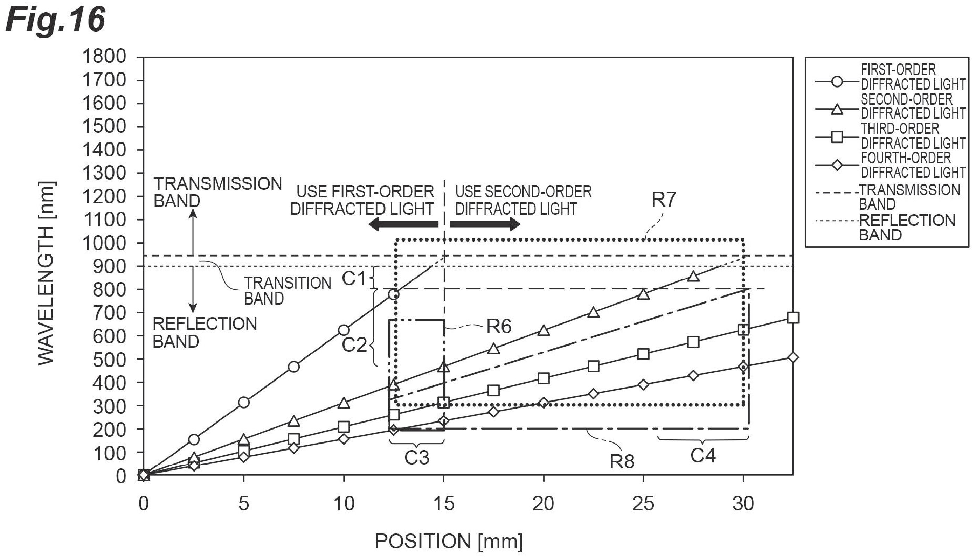

In the second modification example described above, the second-order light is not detected for the first portion C1 in the second wavelength range; however, in the third modification example shown in FIG. 16, the detection region of the second photodetector 127b is set such that the second-order light is also detected for the first portion C1. In FIG. 16, a detection region R7 of the second photodetector 127b is indicated by a rectangular dotted line, and a blocking region R8 of the first filter portion 126b is indicated by a trapezoidal one-dot chain line. In FIG. 16, the ranges of the detection region R7 and the blocking region R8 are approximately 12.5 mm to 30 mm, which is wider than the ranges of the detection region R4 and the blocking region R5 shown in FIG. 15. By widening the range of the detection region R7 in this way, both the first-order light and the second-order light can be detected for the first portion C1.

In this example, the processing portion 5 acquires the intensity in the first portion C1 in the second wavelength range by summing the amounts of signal acquired in ranges C3 and C4 corresponding to the first portion C1. In the example of FIG. 16, the ranges C3 and C4 correspond to approximately 12.5 mm to approximately 15 mm and approximately 26 mm to approximately 30 mm, respectively.

In the third modification example described above, both the first-order light and the second-order light included in the second light L2 are detected for the first portion C1 in the second wavelength range, and the second-order light included in the second light L2 is detected for the second portion C2 in the second wavelength range. For example, the amount of signal acquired for the first portion C1 can be increased by detecting both the first-order light and the second-order light included in the second light L2 for the first portion C1 in which the quantum efficiency of the second photodetector 127b is low.

In addition, the first portion C1 is on a longer wavelength side than the second portion C2. In this example, the first portion C1 is 800 nm to 900 nm, and the second portion C2 is approximately 450 nm to 800 nm. Accordingly, for example, even when the quantum efficiency of the second photodetector 127b on the long wavelength side is lower than the quantum efficiency on the short wavelength side, the amount of signal acquired for the first portion C1 can be increased by detecting both the first-order light and the second-order light included in the second light L2 for the first portion C1 in which the quantum efficiency of the second photodetector 127b is low.

The above-described functions and effects will be supplemented. For example, a CMOS image sensor is used as the second photodetector 127b. The quantum efficiency of a CMOS image sensor may decrease toward the long wavelength side. Therefore, there is a risk that the quantum efficiency decreases for the first portion C1, which is on the relatively long wavelength side in the second wavelength range. In contrast, in the third modification example described above, since the amount of signal acquired for the first portion C1 can be increased, a spectroscopic image can be generated with high accuracy even when the quantum efficiency in the first portion C1 is low.

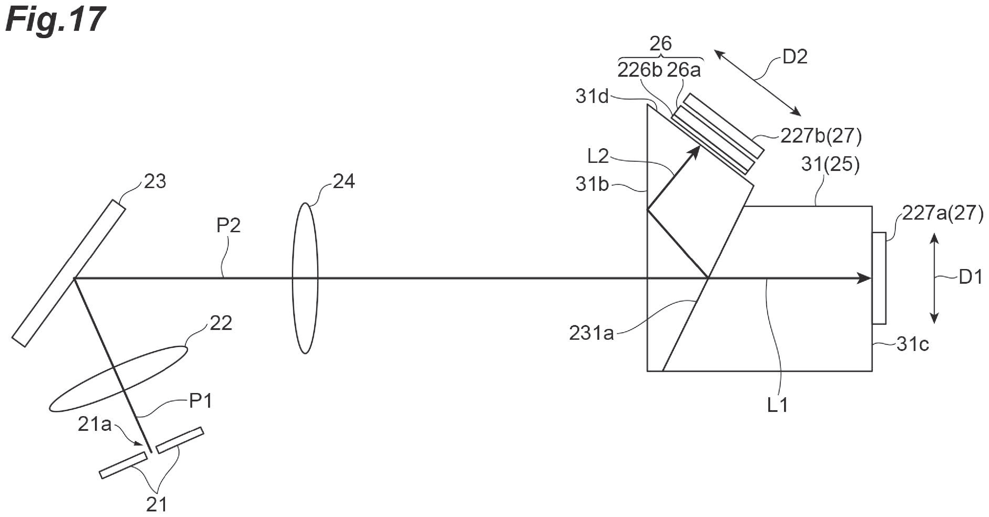

In the fourth modification example shown in FIG. 17, the wavelength of light detected in the light detection portion 27 is different from that of the above-described embodiment. In the fourth modification example, light mainly in the ultraviolet to visible range is detected. In this example, the light source 11 outputs, for example, an irradiation light P1 that is light in a wavelength range of 170 nm to 900 nm.

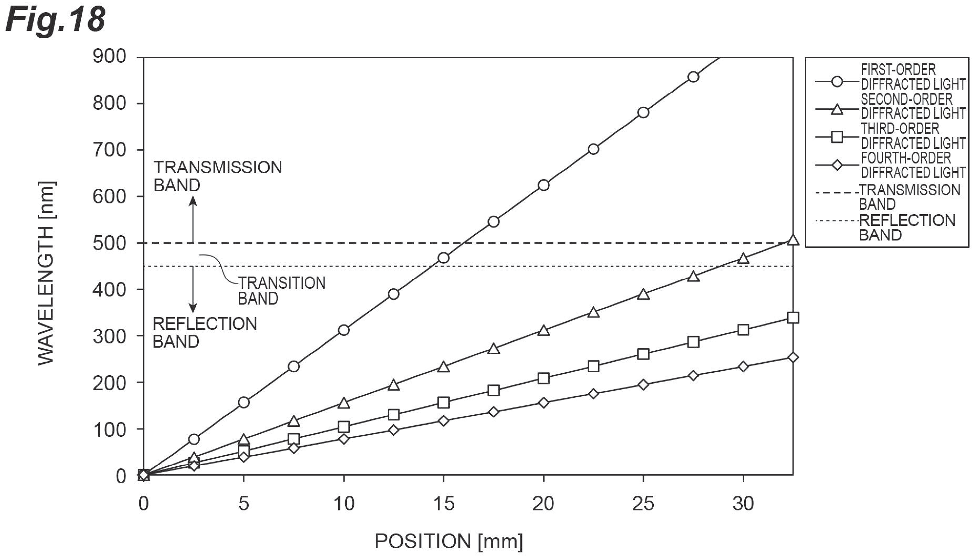

In this example, the prism 31 includes a dichroic surface 231a having characteristics different from those of the dichroic surface 31a of the above-described embodiment. As shown in FIG. 18, the dichroic surface 231a transmits light of 500 nm or more (transmission band) as the first wavelength range and reflects light of 450 nm or less (reflection band) as the second wavelength range. The dichroic surface 231a is constituted by, for example, a dielectric multilayer film. In this example, since the wavelength range of the irradiation light P1 is 170 nm to 900 nm, the first light L1 having a wavelength of 500 nm to 900 nm (first wavelength range) transmits through the dichroic surface 231a, and the second light L2 having a wavelength of 170 nm to 450 nm (second wavelength range) is reflected by the dichroic surface 231a.

The light detection portion 27 includes a first photodetector 227a having a sensitivity wavelength range different from that of the first photodetector 27a of the above-described embodiment, and a second photodetector 227b having a sensitivity wavelength range different from that of the second photodetector 27b of the above-described embodiment. The first photodetector 227a and the second photodetector 227b are constituted by two detectors having sensitivity wavelength ranges substantially the same as each other. The fact that two detectors have sensitivity wavelength ranges substantially the same as each other includes, for example, the case where the types of the two detectors are the same as each other. In addition, the fact that two detectors have sensitivity wavelength ranges substantially the same as each other includes, in the case where the types of the two detectors are different from each other, the case where, when the wavelength range in which the sensitivity wavelength ranges of the two detectors overlap each other is defined as an overlapping portion, the ratio of the overlapping portion to the sensitivity wavelength range of each of the two detectors is 90% or more. In this example, each of the first photodetector 227a and the second photodetector 227b is a CMOS image sensor. That is, in this example, the first photodetector 227a and the second photodetector 227b are detectors of the same type (identical) as each other. The sensitivity wavelength range of each of the first photodetector 227a and the second photodetector 227b is, for example, 170 nm to 900 nm. The sensitivity wavelength range of the first photodetector 227a overlaps at least a portion (in this example, the entirety) of the first wavelength range, and the sensitivity wavelength range of the second photodetector 227b overlaps at least a portion (in this example, the entirety) of the second wavelength range.

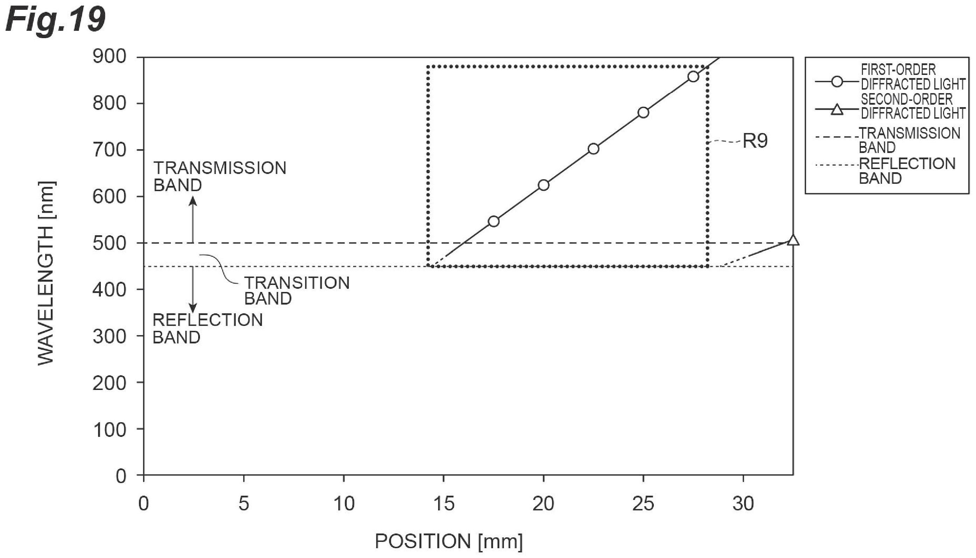

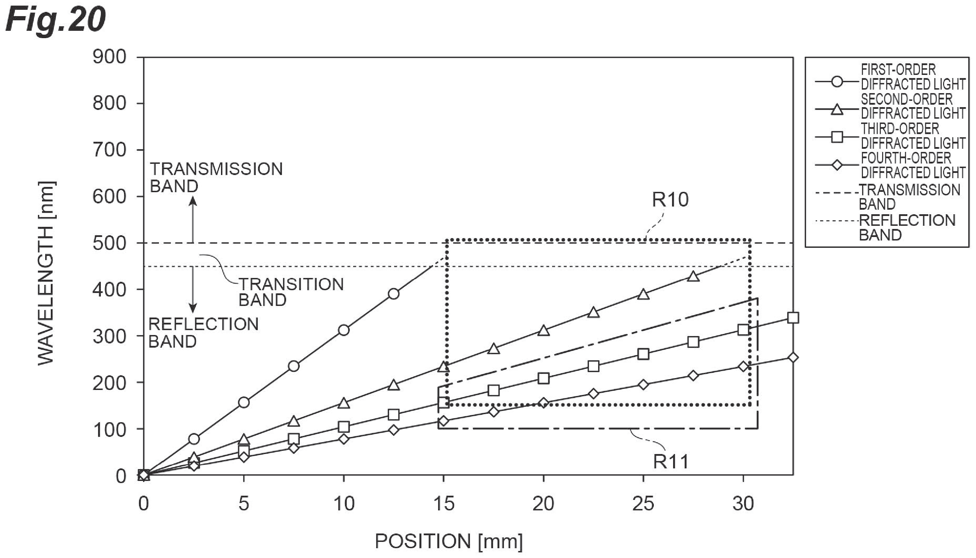

With reference to FIGS. 19 and 20, the diffracted light detected by each of the first photodetector 227a and the second photodetector 227b in the fourth modification example will be described. In FIG. 19, a detection region R9 of the first photodetector 227a is indicated by a rectangular dotted line. In this example, a part of the sensitivity wavelength range of the first photodetector 227a (450 nm to 900 nm) overlapping the first wavelength range (500 nm to 900 nm) is shown as the detection region R9. In this example, the first photodetector 227a detects light in a wavelength range of 450 nm to 900 nm incident at positions of approximately 14 mm to approximately 28 mm. In FIG. 20, a detection region R10 of the second photodetector 227b is indicated by a rectangular dotted line. In this example, a part of the sensitivity wavelength range of the second photodetector 227b (170 nm to 500 nm) overlapping the second wavelength range (170 nm to 450 nm) is shown as the detection region R10. The filter 26 has a filter portion 226b (FIG. 17) having a blocking region different from that of the filter portion 26b of the above-described embodiment, and in FIG. 20, a blocking region R11 of the filter 26 is indicated by a trapezoidal one-dot chain line. In this example, the second photodetector 227b can detect light in a wavelength range of 170 nm to 500 nm incident at positions of approximately 15 mm to approximately 30 mm. The filter portion 226b is configured such that the wavelength of light transmitted at positions of approximately 15 mm to approximately 30 mm changes continuously, so as to block the third-order light and the fourth-order light included in the second light L2. As described above, similarly to the above-described embodiment, only the first-order light included in the first light L1 is detected by the first photodetector 227a, and only the second-order light included in the second light L2 is detected by the second photodetector 227b.

With the fourth modification example as well, similarly to the above-described embodiment, light in a wide wavelength range can be spectrally separated and detected with sufficient diffraction efficiency. In addition, in the fourth modification example, the first photodetector 227a and the second photodetector 227b are constituted by two detectors having sensitivity wavelength ranges substantially the same as each other. Accordingly, the first photodetector 227a and the second photodetector 227b can be constituted by, for example, the same detector. For example, in the fourth modification example, the first photodetector 227a and the second photodetector 227b are constituted by the same CMOS image sensor.

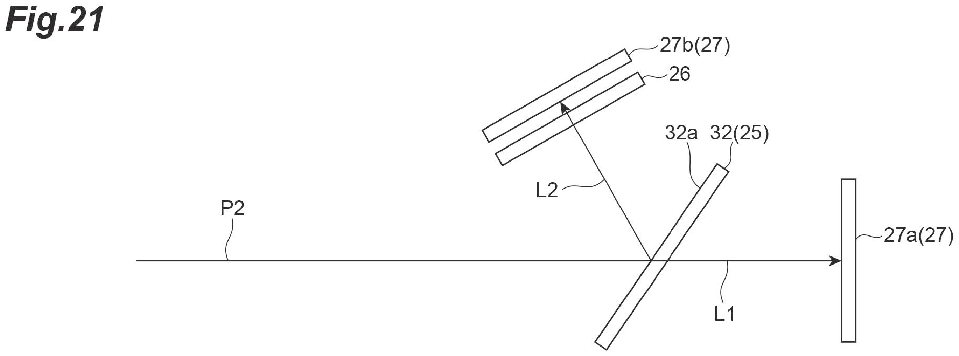

As in the fifth modification example shown in FIG. 21, the light separation portion 25 may be constituted by a dichroic mirror 32 including a dichroic surface 32a, and the prism 31 may be omitted. The characteristics of the dichroic surface 32a are, for example, the same as the characteristics of the dichroic surface 31a of the above-described embodiment. In this example, the filter 26 and the second photodetector 27b are disposed such that the second light L2 reflected by the dichroic surface 32a is directly incident on the filter 26.

The present disclosure is not limited to the above-described embodiment and modification examples. For example, the material and shape of each configuration are not limited to the material and shape described above, and various materials and shapes can be adopted.

In the above-described embodiment, the first-order light included in the first light L1 and the second-order light included in the second light L2 were detected; however, the Nth-order diffracted light (Nth-order light) included in the first light L1 and the Mth-order diffracted light (Mth-order light) included in the second light L2 may be detected by the light detection portion 27. Here, N and M are integers other than 0 where the absolute value of N is smaller than the absolute value of M. For example, the second-order light included in the first light L1 and the third-order light included in the second light L2 may be detected by the light detection portion 27. Namely, N and M are not limited to 1 and 2, and may be 2 and 3, respectively. Alternatively, N and M may be -1 and -2, respectively. Namely, the -first-order light included in the first light L1 and the -second-order light of the second light L2 may be detected by the light detection portion 27.

In the above-described embodiment, the filter 26 blocked diffracted light other than the second-order light included in the second light L2; however, the filter 26 may attenuate the diffracted light. However, when the filter 26 blocks the diffracted light, the second-order light included in the second light L2 can be detected more reliably. The filter 26 may attenuate diffracted light other than the first-order light included in the first light L1. In the above-described embodiment, the filter 26 was fixed on the third surface 31d of the prism 31; however, the filter 26 may be fixed to the second photodetector 27b. In addition, the filter 26 may be a component of the light separation portion 25, or may be a component of the light detection portion 27.

In the above-described embodiment, the first-order light included in the first light L1 and the second-order light included in the second light L2 were detected by the first photodetector 27a and the second photodetector 27b, respectively; however, the first-order light and the second-order light may be detected by a single photodetector. For example, the first-order light included in the first light L1 may be detected by a first detection region of the photodetector, and the second-order light included in the second light L2 may be detected by a second detection region of the photodetector that is different from the first detection region.

The wavelength range of the irradiation light P1 and the first wavelength range and the second wavelength range are not limited to the above-described examples. In addition, the sensitivity wavelength range of the first photodetector 27a and the sensitivity wavelength range of the second photodetector 27b are not limited to the above-described examples. In the above-described embodiment, each of the first photodetector 27a and the second photodetector 27b had a plurality of pixels arranged along the direction corresponding to the spectroscopic direction and the direction perpendicular to the direction; however, each of the first photodetector 27a and the second photodetector 27b may have a plurality of pixels arranged only along the direction corresponding to the spectroscopic direction.

### Reference Signs List

1: spectroscopic measurement system, 3: light irradiation portion, 4: spectrometer, 23: spectroscopic portion, 25: light separation portion, 26: filter, 27: light detection portion, 27a, 227a: first photodetector, 27b, 127b, 227b: second photodetector, 31: prism, 31a, 32a, 131a, 231a: dichroic surface, B: object, C1: first portion, C2: second portion, D1: first direction, D2: second direction, L1: first light, L2: second light, P2: light.

## Claims

1. A spectrometer comprising:
a spectroscopic portion;
a light separation portion that separates light spectrally separated by the spectroscopic portion into a first light in a first wavelength range and a second light in a second wavelength range shorter than the first wavelength range; and
a light detection portion that detects an Nth-order diffracted light included in the first light separated by the light separation portion and detects an Mth-order diffracted light included in the second light separated by the light separation portion, where N and M are integers other than 0 where an absolute value of N is smaller than an absolute value of M.

2. The spectrometer according to claim 1,
wherein the light detection portion includes a first photodetector that detects the Nth-order diffracted light and a second photodetector that detects the Mth-order diffracted light.

3. The spectrometer according to claim 2,
wherein the first photodetector and the second photodetector are constituted by two detectors having sensitivity wavelength ranges substantially different from each other.

4. The spectrometer according to claim 2,
wherein the first photodetector and the second photodetector are constituted by two detectors having sensitivity wavelength ranges substantially the same as each other.

5. The spectrometer according to any one of claims 1 to 4, further comprising:
a filter that is disposed between the light separation portion and the light detection portion and that attenuates at least one of diffracted light other than the Nth-order diffracted light included in the first light and diffracted light other than the Mth-order diffracted light included in the second light.

6. The spectrometer according to any one of claims 1 to 5,
wherein the light separation portion includes a dichroic surface that transmits one of the first light and the second light and reflects the other of the first light and the second light.

7. The spectrometer according to claim 6,
wherein the light separation portion includes a prism including the dichroic surface, and
the light detection portion is fixed directly or indirectly to the prism.

8. The spectrometer according to any one of claims 1 to 7,
wherein the light detection portion detects, in addition to the Mth-order diffracted light included in the second light, an Nth-order diffracted light included in the second light.

9. The spectrometer according to claim 8,
wherein the light detection portion detects the Nth-order diffracted light included in the second light for a first portion in the second wavelength range, and detects the Mth-order diffracted light included in the second light for a second portion in the second wavelength range.

10. The spectrometer according to claim 9,
wherein a diffraction efficiency of an Nth-order diffracted light of the spectroscopic portion in the first portion is higher than a diffraction efficiency of an Mth-order diffracted light of the spectroscopic portion in the first portion.

11. The spectrometer according to claim 8,
wherein the light detection portion detects both the Nth-order diffracted light and the Mth-order diffracted light included in the second light for a first portion in the second wavelength range, and detects the Mth-order diffracted light included in the second light for a second portion in the second wavelength range.

12. The spectrometer according to claim 11,
wherein the first portion is on a longer wavelength side than the second portion.

13. The spectrometer according to any one of claims 1 to 12,
wherein the absolute value of N is 1 and the absolute value of M is 2.

14. The spectrometer according to any one of claims 1 to 13,
wherein the spectroscopic portion includes a spectroscopic element capable of spectrally separating at least light in a wavelength range of 1000 nm to 1500 nm into a first-order diffracted light.

15. The spectrometer according to any one of claims 1 to 14,
wherein the spectroscopic portion includes a spectroscopic element composed of a blazed diffraction grating, and
a blaze wavelength of the blazed diffraction grating is 1000 nm or more.

16. The spectrometer according to any one of claims 1 to 15,
wherein the light detection portion includes a plurality of pixels arranged along a first direction corresponding to a spectroscopic direction of the spectroscopic portion and a direction intersecting the first direction.

17. A spectroscopic measurement system comprising:
the spectrometer according to any one of claims 1 to 16; and
a light irradiation portion that irradiates an object with light,
wherein light irradiated from the light irradiation portion and reflected or scattered by the object is spectrally separated by the spectroscopic portion and detected by the light detection portion.
